# FASCICULE DE BREVET EUROPEEN

(11) **EP 3 685 020 B1**
(45) Date de publication et mention de la délivrance du brevet: **17.04.2024**
(21) Numéro de dépôt: 18826411.3
(22) Date de dépôt: 20.11.2018
(51) Int. Cl.: F01D 11/02, F01D 11/12, F04D 29/52, F16J 15/447

(54) **JOINT À LABYRINTHE, NOTAMMENT POUR UNE TURBINE D'AÉRONEF**
LABYRINTHDICHTUNG, SPEZIELL FÜR EINE FLUGZEUGTURBINE
LABYRINTH SEAL, IN PARTICULAR FOR AN AIRCRAFT TURBINE

(30) Priorité: 21.11.2017 FR 1761014
(43) Date de publication de la demande: 29.07.2020
(73) Titulaire: Safran Aircraft Engines, 75015 Paris (FR)
(72) Inventeur: JOUY, Baptiste, Marie, Aubin, Pierre, 77550 Moissy-Cramayel (FR); VERDIERE, Mathieu, Charles, Jean, 77550 Moissy-Cramayel (FR)
(74) Mandataire: Brevalex
(86) Numéro de dépôt international: PCT/FR2018/052909
(87) Numéro de publication internationale: WO 2019/102124

(56) Documents cités:
- EP-A1- 2 613 008
- EP-A2- 3 081 763
- WO-A1-00/58607
- WO-A1-2017/200656
- DE-A1- 10 259 963
- DE-A1-102011 102 598
- DE-A1-102012 106 175
- DE-B4- 10 259 963
- FR-A1- 2 583 493
- FR-A1- 3 028 882
- FR-A1- 3 040 461
- US-A1- 2016 237 836

## Description

Le sujet de l'invention est un joint à labyrinthe disposé dans une turbine de turbomachine, notamment pour un moteur d'aéronef.

Les joints à labyrinthe sont disposés entre deux pièces en rotation relative et sont caractérisés par des surfaces en regard, séparées l'une de l'autre par un jeu radial et qui tolèrent un écoulement de fuite entre elles, tout en le limitant grâce à une forme sinueuse et donc des pertes de charges élevées qu'elles lui imposent. L'emploi de joints à labyrinthe est fréquent dans les turbomachines entre le rotor et le stator.

On cherche à réduire les débits de fuite à travers de tels joints pour améliorer le rendement de la turbomachine. On recourt très souvent, dans l'aéronautique, à des constructions du joint où une des pièces en regard est munie d'une structure dite abradable, ayant la propriété d'une faible résistance au frottement et à l'usure, et qui présente souvent une structure en nid d'abeille. L'autre des parties du joint, disposée sur l'autre des pièces comprend des léchettes, c'est-à-dire des crêtes saillantes circulaires ou coniques, dont l'extrémité libre est dirigée vers l'abradable. Cette construction permet de réduire les jeux entre les deux parties du joint à labyrinthe, puisque les léchettes peuvent entamer l'abradable sans détruire le joint, quand des dilatations thermiques ou mécaniques différentielles (dues aux échauffements ou aux forces centrifuges), et survenant dans des circonstances telles que des régimes transitoires mettent temporairement l'abradable et les crêtes des léchettes en contact. Un exemple de joint à labyrinthe, cité ici car il possède des ressemblances superficielles avec l'invention, est le sujet du document FR-3028882-A. L'abradable de ce document est conçu pour posséder une résistance plus élevée aux impacts, en évitant d'en arracher de grandes surfaces, et l'abradable est fixé à son substrat par une structure de liaison composée de nids d'abeilles, dont les cellules sont occupées par une partie de l'abradable, qui est ici une couche continue et homogène. Il est précisé (page 4, lignes 6 à 10) que la structure de liaison ne devrait pas être soumise à l'usure des léchettes. La structure de liaison a des cloisons plus denses, et des cellules plus petites, à une région située plus en aval, afin d'ancrer mieux l'abradable à un endroit où il peut être soumis à des efforts importants à certains redémarrages du moteur, comme on le développera ci-après ; mais cette disposition de la structure de liaison est inverse de celle qu'on retrouve dans certaines réalisations de l'invention, ce qui la rend moins efficace pour éviter des situations de blocage des léchettes dans l'abradable lors des différentes phases de fonctionnement moteur (situation de blocage du rotor communément appelée « rotor lock » en anglais).

L'art antérieur proche comprend encore EP 3 081 763 A2, qui décrit un joint à labyrinthe dont l'abradable est composé de deux bandes juxtaposées devant une léchette, qui vient devant une des bandes pendant le service normal de la turbomachine, et devant l'autre bande, dont la résistance est plus petite, en cas d'autorotation (« windmilling ») ; DE 10 2011 102 598 A1, qui décrit une structure d'abradable composée de bandes successives dont les cellules peuvent avoir des orientations différentes (mais seules des cellules en nid d'abeille, et des inclinaisons d'ensemble des cellules dans la direction de l'axe central autour de la direction angulaire, sont explicitement mentionnées) ; DE 102 59 963 A1, une structure d'abradable dont les cellules peuvent avoir des sections de formes variées dans des bandes circulaires successives le long de l'axe de rotation, mais sans qu'on indique de résistances différentes à l'usure, ni la position des léchettes par rapport aux bandes, ni de placements des léchettes devant différentes bandes selon les régimes de la turbomachine ; WO 2017 / 200 656 A1, une autre structure d'abradable composée de bandes dont les cellules ont des sections notamment hexagonales en nid d'abeille, circulaires, ou elliptiques, avec certaines cloisons orientées dans la direction de mouvement des léchettes ou perpendiculairement à cette direction, donc en formant des points durs ; WO 00 / 58607 A1 et FR 2 583 493 A, d'autres structures d'abradable composées de feuillards crénelés assemblés entre eux de manière à former des cellules de section rectangulaire ou hexagonale, avec apparemment des cloisons parallèles ou perpendiculaires à la direction de mouvement des léchettes, et la structure est uniforme ; et DE 10 2012 106 175 A1, une structure d'abradable composée apparemment de tuiles (« Bausteine ») compactes en céramique ou métal, sans formation de cellules, et dont le but est de réduire la composante, tourbillonnant en direction angulaire, de vitesse des gaz.

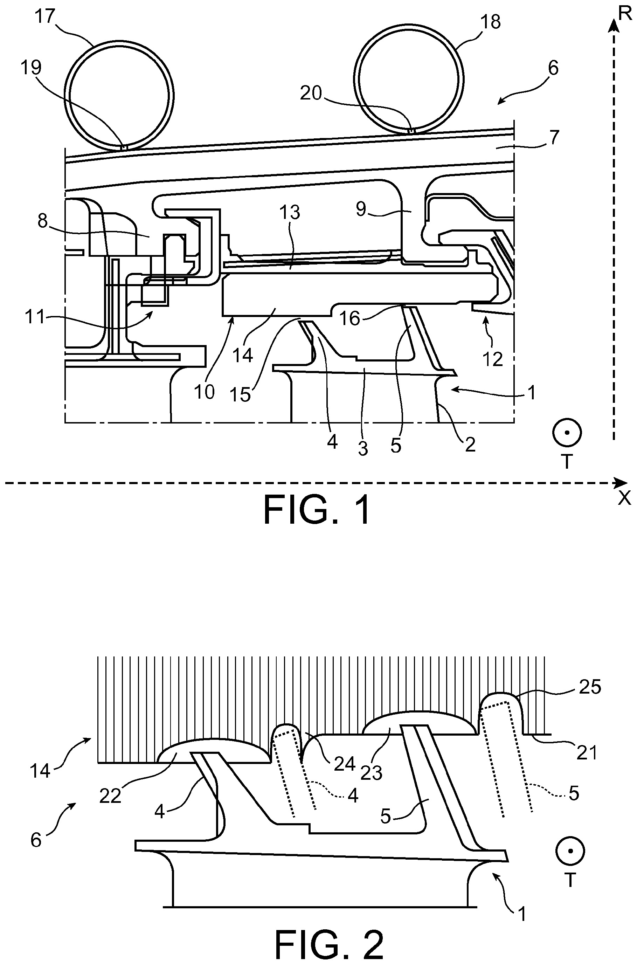

Un exemple d'un genre très fréquent de joint à labyrinthe est représenté à la figure 1, qui illustre un fragment de turbine de turbomachine. Le rotor 1 comprend à cet endroit un étage d'aubes mobiles 2, unies entre elles à leur extrémité de sommet, radialement extérieure, par un talon 3 porteur ici de deux léchettes 4 et 5 coniques, saillant radialement vers l'extérieur. La turbomachine comprend aussi un stator 6 comprenant un carter 7 muni de deux nervures circulaires 8 et 9 saillant radialement vers l'intérieur et porteuses des extrémités d'un anneau d'étanchéité 10 (normalement divisé en secteurs angulaires sur la circonférence) relié aux nervures 8 et 9 par des ajustements en crochets 11 et 12 bien connus. L'anneau d'étanchéité 10 comprend un substrat 13 rigide, porteur des crochets, et une couche d'abradable 14 brasée sur le substrat 13 et dirigée vers les léchettes 4 et 5.

L'écoulement de fuite des gaz autour du rotor 1 a son débit diminué par les restrictions de sections qui lui sont imposées pour contourner les léchettes 4 et 5, dont les extrémités libres sont à proximité immédiate de l'abradable 14. La perméabilité du joint à labyrinthe comprenant les léchettes 4 et 5 et l'abradable 14 dépend avant tout des jeux 15 et 16 séparant l'abradable 14 du sommet des léchettes 4 et 5. Ces jeux 15 et 16 ont été ajustés à froid par des réglages préliminaires, et ils le sont pendant le fonctionnement de la turbomachine grâce à un rafraîchissement du carter 7 opéré par de l'air frais, soutiré au niveau de la partie compresseur de la turbomachine et qui est soufflé sur la face extérieure du carter 7 par des rampes circulaires 17 et 18 munies d'orifices 19 et 20.

La disposition du joint à labyrinthe en régime de croisière de la turbomachine est typiquement celle qu'on représente à la figure 2, dans laquelle les extrémités libres des léchettes 4 et 5 pénètrent légèrement à l'intérieur de la surface d'origine 21 de l'abradable 14, après avoir creusé des entailles 22 et 23 par usure locale de l'abradable 14 pendant des états transitoires de la turbomachine. Les jeux 15 et 16 dans le joint sont alors bien réduits, et le trajet de l'écoulement de fuite est sinueux et irrégulier, ce qui assure une perte de charge importante de l'écoulement de fuite, et une perte de rendement supportable de la turbomachine.

Une situation délicate apparaît néanmoins quand le moteur a été éteint en vol, puis rallumé. Les dilatations thermiques différentielles se modifient, le stator 6 se refroidissant alors plus que le rotor 1. Il en résulte à la fois une contraction plus grande du stator 6 et un déplacement axial du rotor 1 (déplacement vers l'aval de celui-ci, dans le cas d'une turbine), qui conduit les léchettes 4 et 5 à pénétrer plus profondément dans la couche d'abradable 14 pour former de nouvelles entailles 24 et 25 situées à côté des précédentes et plus profondes, grâce à la rotation du rotor 1 en roue libre (« windmilling ») qui subsiste. Mais quand le moteur est rallumé, le réchauffage bénéficie d'abord au rotor 1, ce qui dilate les léchettes 4 et 5, les enfonce de manière encore plus importante dans les nouvelles entailles 24 et 25 et risque de conduire à un blocage du rotor 1, proscrit comme très dangereux pour la sécurité de l'aéronef.

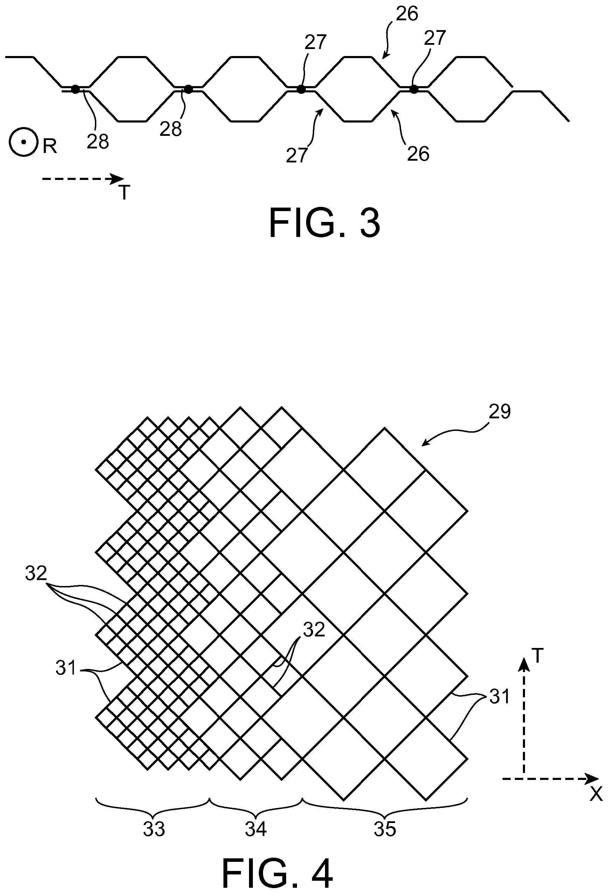

On se reporte à la figure 3 pour développer ce problème de blocage possible du rotor 1 par un abradable 14 trop dur. Une structure usuelle de l'abradable 14 est composée de feuillards métalliques pliés par un passage dans une matrice, et plusieurs feuillards de cette espèce sont ensuite assemblés et soudés par des points de soudure 27 pour former la structure hexagonale usuelle des nids d'abeille. Quand toutefois les feuillards 26 sont brasés sur le substrat 13, on a observé que le matériau de brasure remontait par capillarité entre les faces jointives des feuillards 26, éventuellement jusqu'à l'extrémité libre de la couche extérieure de l'abradable 14 destinée à être disposée en regard des léchettes, ce qui donne des sections dures 28 entre faces en contact des feuillards 26, qui accroissent la résistance à l'usure de l'abradable 14, et d'autant plus quand elles sont orientées dans le sens du mouvement de pénétration des léchettes 4 et 5 dans l'abradable 14. Ces portions constituent les parties de l'abradable 14 les plus résistantes à l'usure et les plus susceptibles d'être responsables d'un blocage du rotor 1.

On a donc entrepris de réduire ce risque d'avarie, et une conception nouvelle et améliorée de l'abradable a été proposée.

On se reportera aux revendications pour une définition précise de l'invention.

Les régions (qui correspondent en général à des bandes annulaires entourant l'axe) les plus résistantes à l'usure seront disposées en se retrouvant devant les léchettes de l'autre partie du joint dans les conditions du régime de croisière, et les régions les moins résistantes seront placées aux endroits où les léchettes seront susceptibles de venir pendant des événements pouvant présager un blocage du rotor, c'est-à-dire, dans l'exemple représenté plus haut, à l'emplacement des nouvelles entailles 24 et 25.

Cette structure de l'invention se trouve au moins sur la couche extérieure de l'abradable, c'est-à-dire celle qui comprend la surface libre dirigée vers les léchettes ou plus généralement les structures susceptibles de l'user, contrairement à FR-3028882-A ; la surface libre peut, selon le cas, être à une position radiale interne ou radiale externe de l'abradable.

Et comme les régions sont au nombre de trois ou plus, avec des résistances à l'usure toutes progressives le long de l'axe, c'est-à-dire avec des valeurs intermédiaires pour les régions intermédiaires le long de l'axe, il est fourni une abradabilité adaptée à différentes phases de fonctionnement du moteur, en fonction de dilatation axiales et radiales plus ou moins grandes, dans des états transitoires plus ou moins marqués.

L'explication précédente peut en effet être généralisée à des durées différentes d'extinction du moteur en vol, qui produisent alors des dilatations différentielles différentes d'une situation à l'autre, les valeurs des dilatations en direction axiale étant toutefois corrélées avec les valeurs en direction radiale. On peut alors réduire la résistance de l'abradable, et la perméabilité du joint aux débits de fuite, seulement au degré nécessaire, en perdant donc peu de perméabilité par rapport à un abradable homogène mais sujet au risque de blocage du rotor.

Voici maintenant certaines caractéristiques d'abradables décrits ici, et l'explication de leurs avantages correspondants. Les cloisons de chaque région peuvent tout d'abord avantageusement se joindre à des raccordements qui relient seulement trois des cellules entre elles et sont donc des points de concours de trois des cloisons, ou de trois portions, pouvant être en prolongement, des cloisons. On évite ainsi, avec les raccordements d'un plus grand nombre de cloisons entre elles, la formation de points durs correspondant à une rigidité locale plus grande de l'abradable, avec un accroissement du risque de blocage du rotor.

Il est préconisé, pour simplifier la conception et la fabrication du dispositif, que les cellules soient en section des polygones qui présentent une même superficie, ce qui contribue notamment à l'homogénéité de la rigidité de l'abradable.

Les polygones ou plus généralement les cellules des différentes régions peuvent alors être de forme identique, mais avec soit des résistances différentes, soit des dimensions différentes, et des sections de superficies différentes. Ici encore, la conception et la fabrication de l'abradable sont facilitées. Les cellules rectangulaires, carrées ou non, simplifient elles aussi la fabrication, tout en permettant des raccordements faciles entre les différentes régions de l'abradable.

Les cellules rectangulaires dans lesquelles les cloisons sont toutes orientées en faisant un angle non nul avec une direction angulaire perpendiculaire à l'axe, garantissent l'absence de déplacement d'une léchette sur toute la longueur d'une cloison et réduisent ainsi les risques correspondants de blocage du rotor. Les cloisons des cellules sont orientées selon un angle compris entre 30 et 60° par rapport à la direction de l'axe.

Certaines autres dispositions permettent d'améliorer la cohésion de l'abradable. Certaines des cloisons peuvent ainsi être des cloisons principales rectilignes qui s'étendent à travers plusieurs des cellules, et d'autres des cloisons sont des cloisons de subdivision qui s'étendent seulement entre deux consécutives des cloisons principales. Cette disposition particulière est particulièrement adaptée à une réalisation décrite ci-après, en permettant une disposition en quinconce des cellules entre des bandes successives, qui respecte le critère énoncé plus haut, que les raccordements entre cloisons sont tous avantageusement entourés par trois seulement des cellules.

Certaines des cloisons peuvent encore être des cloisons principales rectilignes, qui s'étendent à travers plusieurs des régions, en améliorant ainsi la cohésion de l'ensemble.

Les cloisons peuvent avoir en général une épaisseur comprise entre 0,1 mm et 0,3 mm.

Un mode de fabrication avantageux relève d'une technique de fabrication additive, donc sans soudure ni renforcement analogue entre des parties de l'abradable qui seraient fabriquées séparément et qu'il faudrait ensuite assembler, puisque la fabrication additive peut au contraire donner un abradable d'un seul tenant. On évite ainsi encore tout point dur local de l'abradable et l'accroissement correspondant du risque de blocage.

Le joint à labyrinthe dans une turbine d'un moteur d'aéronef comprend des léchettes faisant face exclusivement à certaines desdites bandes annulaire de l'abradable de joint à labyrinthe, plus résistantes à l'usure, en régime de croisière, d'autres desdites bandes annulaires, mais moins résistantes à l'usure, étant situées en aval des précédentes.

L'invention sera maintenant décrite plus en détail au moyen des figures suivantes, annexées à titre illustratif et non limitatif :
- la figure 1, déjà décrite, représente en coupe un joint à labyrinthe connu;
- la figure 2, également décrite, un motif usuel d'usure de l'abradable ;
- la figure 3, également décrite, représente une première structure d'abradable, cette structure appartenant à l'art connu ;
- la figure 4 illustre une deuxième structure d'abradable, qui est conforme à l'invention ;
- les figures 5 et 6 illustrent une troisième structure d'abradable, qui ne fait pas partie de l'invention;
- la figure 7, une quatrième structure d'abradable , qui ne fait pas partie de l'invention;
- la figure 8, l'implantation d'une réalisation de l'invention dans un joint à labyrinthe.

Une réalisation de l'invention apparaît à la figure 4. L'abradable, désormais 29, est composé comme précédemment d'une structure alvéolaire, mais qui ici est formée par des cloisons 30 rectilignes, entrecroisées et délimitant des cellules rectangulaires, ici carrées. Les cloisons 30 sont toutes orientées obliquement à l'axe X de la turbomachine, et entre 30 et 60°, notamment à 45° de cet axe. En d'autres termes, aucune des cloisons 30 n'est dirigée dans la direction angulaire T de la turbomachine perpendiculaire à l'axe X et qui est la direction de pénétration des léchettes 4 et 5 dans l'abradable 29. On peut distinguer, parmi les cloisons 30, des cloisons principales 31 de grande longueur, et des cloisons de subdivision 32 parallèles aux précédentes et s'étendant entre elles, mais seulement sur des longueurs réduites et donc le long d'une partie seulement de ces cloisons principales 31. Il en résulte que les cellules présentent des superficies variables : on peut reconnaître dans cet exemple de réalisation, se succédant le long de l'axe X, une bande de petites cellules 33, une bande de cellules moyennes 34, quatre fois plus grandes que les précédentes, et une bande de grandes cellules 35, seize fois plus grandes que les premières. L'abradable 29 a une structure d'un seul tenant, réalisée par une technique additive, et les épaisseurs des cloisons 30 sont ici uniformes, de l'ordre de 0,1 mm à 0,3 mm (des épaisseurs faibles étant préférées) pour des matériaux typiques de construction des abradables.

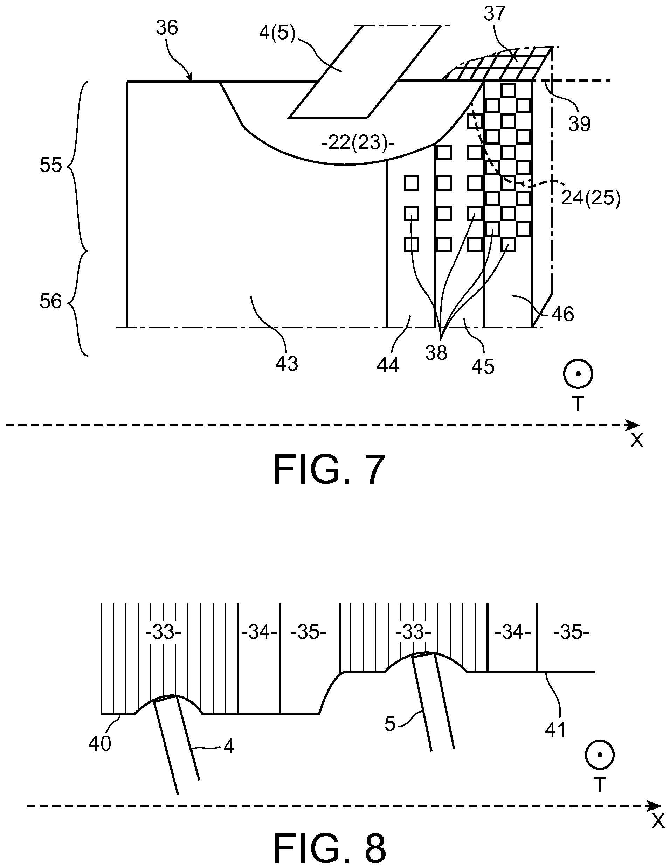

La bande des petites cellules 33 sera placée devant les léchettes 4 et 5 d'après leur emplacement axial au régime de croisière du moteur, ce qu'on représente à la figure 8 ; alors que la bande de grandes cellules 35 sera placée devant les positions présumées atteintes par les léchettes 4 et 5 pendant les régimes de rallumage du moteur. La bande de cellules moyennes 34 sera intermédiaire.

La résistance à l'usure de l'abradable 29 sera donc déterminée en général par la bande des petites cellules 33, alors que la bande des grandes cellules 35 donnera une résistance à l'usure beaucoup plus faible et sera atteinte par les léchettes 4 et 5 pendant les situations susceptibles d'induire un blocage du rotor, c'est-à-dire à l'emplacement des nouvelles entailles 24 et 25. Il en résulte que les risques de blocage du rotor 1 au redémarrage seront réduits grâce à la résistance localement moindre de l'abradable 29. L'utilisation d'une technique additive pour fabriquer une structure d'un seul tenant et former un réseau de cloisons 30, ici d'épaisseur uniforme, permet de mieux maîtriser la résistance à l'usure et d'éviter les sections dures dues aux remontées de brasures entre les cloisons de l'abradable, l'absence de cloisons orientées dans la direction angulaire de la turbomachine 2 (qui est perpendiculaire à l'axe de la turbomachine) ayant le même effet.

Et la bande de cellule moyenne 34 donnera une résistance à l'usure intermédiaire, moyenne, et sera atteinte par les léchettes 4 et 5 pendant des situations d'un arrêt du moteur pour une durée plus courte, à l'issue desquelles les dilatations thermiques seront moins importantes, de même que les risques de blocage du rotor au redémarrage. Il sera donc parfaitement pertinent que l'abradable ait une résistance locale plus faible qu'à la bande des petites cellules 33, mais plus forte qu'à la bande des grandes cellules 35, afin que sa perméabilité d'ensemble ne soit pas trop réduite.

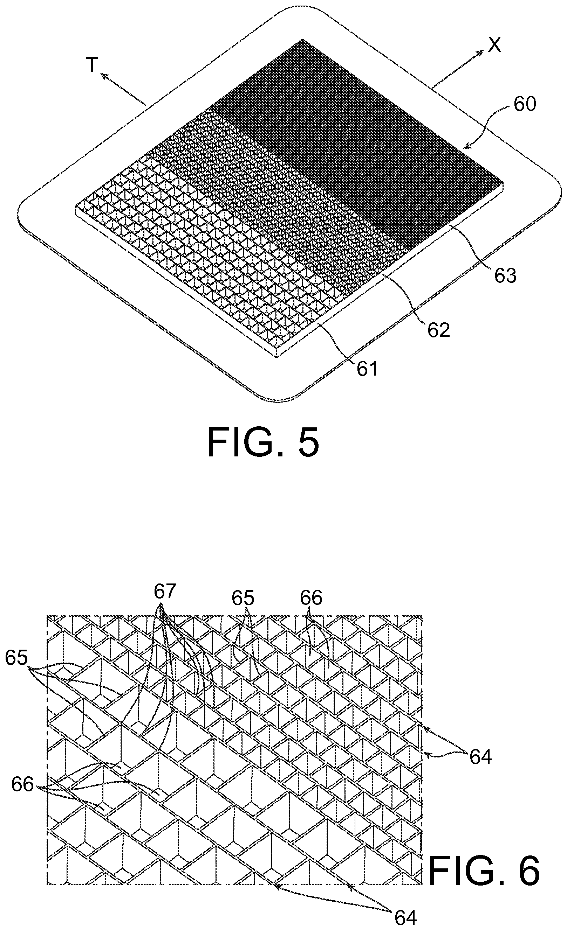

Une autre réalisation d'abradable, qui ne fait pas partie de l'invention, est décrite au moyen des figures 5 et 6. L'abradable porte la référence générale 60 et comprend trois bandes 61, 62 et 63 successives, qui sont composées respectivement de petites cellules, moyennes cellules et grandes cellules, comme précédemment. Les cellules (toutes référencées par 66) sont encore rectangulaires, conformément à des réalisations jugées intéressantes pour l'invention. Par rapport à la conception précédente, deux différences importantes sont à relever. La première est l'orientation des cloisons délimitant les cellules 66, qui sont ici toutes disposées soit dans la direction de l'axe X de la machine, soit dans sa direction angulaire T. On renonce ici à une orientation des cloisons qui contribue à éviter des frottements excessifs possibles des léchettes sur l'abradable 60, et les risques de blocage correspondants, comme dans la réalisation précédente.

Ce risque est ici diminué par une disposition originale : les cloisons de chacune des bandes 61, 62 et 63 sont composées de cloisons principales 64, parallèles entre elles et ici toutes orientées dans la direction angulaire T, qui s'étendent le long de plusieurs des cellules et éventuellement sur toute la largeur de l'abradable 60, c'est-à-dire sur sa circonférence, ou une portion de sa circonférence, selon qu'il est fabriqué en un anneau ou plusieurs segments annulaires s'étendant alors chacun sur un secteur de cercle ; il est aussi composé de cloisons de subdivision 65, qui s'étendent entre les cloisons principales 64, et plus précisément seulement entre deux cloisons principales 64 voisines ; et les cloisons de subdivision 65 de part et d'autre de chaque cloison principale 64 ne viennent pas en correspondance, ce qui donne des cellules 66 disposées avec un décalage angulaire, ou en quinconce, avec les cellules 66 de l'autre côté des cloisons principales 64 ; et le réseau des cloisons 64 et 65 composant l'abradable 60 comprend, pour chacune des bandes 61, 62 et 63, des points de raccordement 67 entre les cloisons 64 et 65 qui sont entourés tous par trois cellules 66 seulement, et sont situés à l'intersection de trois portions seulement des cloisons 64 et 65, deux appartenant à une des cloisons principales 64 et la dernière à une cloison de subdivision 65. Les raccordements 67 ont ainsi une rigidité modérée qui réduit le risque des blocages du rotor si les léchettes 4 et 5 viennent à frotter sur eux. Les cloisons principales 64 contribuent aussi à la cohésion de l'abradable 60, grâce à leur grande extension. Une disposition inverse des cloisons principales 64 et des cloisons 65, en direction axiale X et angulaire T respectivement, serait aussi possible.

Une autre réalisation d'abradable, qui ne fait pas partie de l'invention, est illustrée à la figure 7. L'abradable, alors référencé par 36, est encore composé de cloisons 47, ici aussi entrecroisées pour former des cellules 37. Il est composé encore de bandes 43, 44, 45, 46, ici au nombre de quatre, juxtaposées dans la direction de l'axe X. Ici toutefois, les écartements entre les cloisons 39 sont identiques d'une bande à l'autre, de sorte que les cellules 37 ont toutes les mêmes dimensions et la même superficie. La variation de résistance de l'abradable entre les bandes 43, 44, 45 et 46 est obtenue par des zones de fragilisation 38, qui peuvent consister par exemple en des diminutions d'épaisseur des cloisons 47, des matériaux moins résistants ou autres. De telles fragilisations 38 peuvent être obtenues facilement dans des fabrications additives par une impression tridimensionnelle, où le processus est entièrement piloté par un programme. Les zones de fragilisation 38 sont absentes de la bande 43 principale, et de plus en plus nombreuses ou denses dans les bandes 44, 45 et 46. L'effet est le même que précédemment : la résistance de l'abradable 36 est de plus en plus faible de la bande 43 à la bande opposée 46.

D'autres moyens de créer les zones de fragilisation 38 consisteraient à créer des entailles ou des perforations à travers les cloisons 47.

Les différentes particularités de ces modes de réalisation peuvent généralement être combinées entre elles.

Un aspect important est que les différentes bandes de l'abradable 29 ou 36 ont à l'origine la même hauteur devant une léchette respective, ce qu'on indique par les lignes de niveau 39, 40 et 41 aux figures 7 et 8. En d'autres termes, on n'échancre pas à l'origine les zones de l'abradable 29 ou 36 susceptibles de bloquer le rotor, ce qui aurait eu comme effet de diminuer ce risque d'interférence avec les léchettes 4 et 5, mais au prix de performances réduites pendant le service normal de la turbomachine.

D'une façon générale, il suffit que la structure qu'on a décrite s'étende dans une couche extérieure de l'abradable, limitée par une surface libre en regard des léchettes : une telle couche extérieure est représentée à la figure 7, où elle porte la référence 55, et où les hétérogénéités de structure sont concentrées ; l'abradable pourrait encore comprendre d'autres couches 56, sous-jacentes à la couche extérieure 55, construites avec une autre structure et éventuellement homogènes.

## Revendications

1. Turbine de turbomachine, notamment d'un moteur d'aéronef, comprenant un rotor (1), un stator (6) et un joint à labyrinthe, le rotor comprenant un étage d'aubes mobiles (2) avec un talon (3) porteur disposés sur les aubes mobiles (2) à leur extrémité de sommet, et le stator (6) comprenant un anneau d'étanchéité (10) porté par un carter (7) du stator (6), l'anneau d'étanchéité (10) comprenant un substrat (13) rigide et une structure d'abradable (29), le joint étant formé par la structure abradable (29) dirigée vers des léchettes (4, 5) du talon (3) porteur et étant disposé autour d'un axe (X) de la turbomachine, l'abradable (29) étant annulaire et de préférence sectorisé et comprenant, dans une couche extérieure limitée par une surface libre en regard des léchettes (4, 5), et pourvue de cloisons (31, 32) délimitant des cellules, des régions (33, 34, 35) formées par des bandes annulaires juxtaposées pour se succéder dans une direction de l'axe (X), chacune des bandes ayant une résistance différente à l'usure,
**caractérisé en ce que** les régions sont au moins trois, les résistances à l'usure ont des valeurs progressives qui sont de plus en plus faibles en direction de l'aval le long de l'axe (X), les cellules sont rectangulaires, et toutes les cloisons sont orientées selon un angle compris entre 30 et 60° par rapport à la direction de l'axe (X), et la bande (33) des cellules plus résistantes à l'usure est destiné à être placée devant les léchettes (4, 5) d'après leur emplacement axial au régime de croisière du moteur, la bande (35) de cellules moins résistante à l'usure étant destinée à être située en aval des bandes (33, 34) en étant placée devant les positions présumées atteintes par les léchettes (4, 5) pendant les régimes de rallumage du moteur, et la bande (34) de cellules moyennes est intermédiaire.

2. Turbine de turbomachine selon la revendication 1, **caractérisé en ce que**, pour chacune des régions (33, 34, 35), les cellules ont des sections qui présentent une même superficie.

3. Turbine de turbomachine selon la revendication 2, **caractérisé en ce que**, dans chacune des régions (33, 34, 35), les sections des cellules rectangulaires présentent une superficie différente des sections de cellules rectangulaires des autres régions.

4. Turbine de turbomachine selon la revendication 2, **caractérisé en ce qu'**au moins une cellule d'une région présente une zone de fragilisation locale (38) de sorte à avoir une résistance à l'usure plus faible que les autres cellules de la région.

5. Turbine de turbomachine selon l'une quelconque des revendications 1 à 4, **caractérisé en ce que** certaines des cloisons sont des cloisons principales (31) rectilignes qui s'étendent à travers plusieurs des cellules, et d'autres des cloisons sont des cloisons de subdivision (32) qui s'étendent seulement entre deux consécutives des cloisons principales.

6. Turbine de turbomachine selon l'une quelconque des revendications 1 à 5, **caractérisé en ce que** les cloisons (31, 32) ont une épaisseur comprise entre 0,1 mm et 0,3 mm.

7. Turbine de turbomachine selon l'une quelconque des revendications précédentes, **caractérisé en ce que** l'abradable (29) est fabriqué par une technique de fabrication additive et présente une structure formée d'un seul tenant.

## Patentansprüche

1. Turbomaschinenturbine, insbesondere für ein Flugzeugtriebwerk, umfassend einen Rotor (1), einen Stator (6) und eine Labyrinthdichtung, wobei der Rotor eine Stufe von Laufschaufeln (2) mit einem tragenden Absatz (3) umfasst, der an den Laufschaufeln (2) an deren Scheitelende angeordnet ist, und der Stator (6) einen Dichtring (10) umfasst, der von einem Gehäuse (7) des Stators (6) getragen wird, wobei der Dichtring (10) ein starres Substrat (13) und eine abreibbare Struktur (29) umfasst, wobei die Dichtung durch die abreibbare Struktur (29) gebildet wird, die in Richtung der Zungen (4, 5) des tragenden Absatzes (3) gerichtet und um eine Achse (X) der Turbomaschine herum angeordnet ist, wobei das abreibbare Teil (29) ringförmig und vorzugsweise sektorisiert ist und in einer äußeren Schicht, die durch eine den Zungen (4, 5) zugewandte freie Oberfläche begrenzt und mit Zellen begrenzenden Trennwänden (31, 32) versehen ist, Bereiche (33, 34, 35) umfasst, die durch ringförmige Bänder gebildet werden, die so nebeneinander angeordnet sind, dass sie in einer Richtung der Achse (X) aufeinander folgen, wobei jedes der Bänder eine unterschiedliche Verschleißfestigkeit hat,
**dadurch gekennzeichnet, dass** die Bereiche mindestens drei sind, die Verschleißfestigkeit progressive Werte hat, die entlang der Achse (X) stromabwärts immer niedriger werden, die Zellen rechteckig sind und alle Trennwände in einem Winkel zwischen 30 und 60° in Bezug auf die Richtung der Achse (X) ausgerichtet sind, und das Band (33) mit den verschleißfesteren Zellen dazu bestimmt ist, entsprechend ihrer axialen Lage bei der Betriebsdrehzahl des Motors vor den Zungen (4, 5) angeordnet zu werden, wobei das Band (35) der weniger verschleißfesten Zellen dazu bestimmt ist, stromabwärts der Bänder (33, 34) angeordnet zu werden, indem sie vor den mutmaßlichen Positionen platziert werden, die von den Zungen (4, 5) während der Wiederzündungsdrehzahlen des Motors erreicht werden, und das Band (34) der mittleren Zellen dazwischenliegend ist.

2. Turbomaschinenturbine nach Anspruch 1, **dadurch gekennzeichnet, dass** die Zellen für jeden der Bereiche (33, 34, 35) Abschnitte haben, die dieselbe Grundfläche aufweisen.

3. Turbomaschinenturbine nach Anspruch 2, **dadurch gekennzeichnet, dass** die Abschnitt der rechteckigen Zellen in jedem der Bereiche (33, 34, 35) eine Grundfläche aufweisen, die sich von der der Abschnitte der rechteckigen Zellen der anderen Bereiche unterscheidet.

4. Turbomaschinenturbine nach Anspruch 2, **dadurch gekennzeichnet, dass** mindestens eine Zelle eines Bereichs eine lokale Schwächungszone (38) aufweist, um eine geringere Verschleißfestigkeit als die anderen Zellen des Bereichs zu haben.

5. Turbomaschinenturbine nach einem der Ansprüche 1 bis 4, **dadurch gekennzeichnet, dass** einige der Trennwände geradlinige Haupttrennwände (31) sind, die sich durch mehrere der Zellen erstrecken, und andere Trennwände Unterteilungstrennwände (32) sind, die sich nur zwischen zwei aufeinanderfolgenden Haupttrennwänden erstrecken.

6. Turbomaschinenturbine nach einem der Ansprüche 1 bis 5, **dadurch gekennzeichnet, dass** die Trennwände (31, 32) eine Dicke zwischen 0,1 mm und 0,3 mm haben.

7. Turbomaschinenturbine nach einem der vorhergehenden Ansprüche, **dadurch gekennzeichnet, dass** das abreibbare Teil (29) durch ein additives Herstellungsverfahren hergestellt ist und eine aus einem Stück geformte Struktur aufweist.

## Claims

1. Turbomachine turbine, notably for an aircraft engine, comprising a rotor (1), a stator (6) and a labyrinth seal, said rotor (1) comprising a stage of movable vanes (2) with a root (3) disposed at the tip end of said movable vanes (2), and the stator (6) comprising a sealing ring (10) carried by a casing (7) of said stator (6), said sealing ring (10) comprising a rigid substrate (13) and an abradable structure (29), said seal being formed by said abradable structure (29) directed towards wipers (4, 5) of said root (3) and being disposed around an axis (X) of said turbomachine, said abradable (29) being annular and preferably sectored and comprising in an outer layer (55) delimited by a free end facing wipers (4, 5), and provided with partitions (31, 32) delimiting cells, regions (33, 34, 35) formed by annular bands juxtaposed to succeed one another in a direction of the axis (X), each of said band having a different wear resistance,
**characterized in that** said regions are at least three, said wear resistances being progressively lower in the downstream direction along the axis (X), the cells are rectangular, the partitions of the cells are oriented at an angle comprised between 30 and 60° relative to the direction of the axis (X). the band (33) of most wear resistance cells being placed in front of said wipers (4,5) according to their axial location at cruising speed of the engine, the band (35) of less wear resistance cells being located downstream of the previous ones in being placed in front of the positions presumed to have been reached by said wipers (4,5) during the engine re-ignition speeds, and the band (34) of medium cells being intermediate.

2. Turbomachine turbine according to claim 1, **characterised in that**, for each of the regions (33, 34, 35), the cells have sections which have the same area.

3. Turbomachine turbine according to claim 2, **characterised in that**, in each of the regions (33, 34, 35), sections of the rectangular cells have a different area of sections of rectangular cells of other regions.

4. Turbomachine turbine according to claim 2, **characterised in that** at least one cell of a region has a local embrittlement (38) so as to have a lower wear resistance than the other cells of the region.

5. Turbomachine turbine according to any of claims 1 to 4, **characterized in that** some of the partitions are main rectilinear partitions (31) which extend through several of the cells, and others of the partitions are subdivision partitions (32) which extend only between two consecutive main partitions.

6. Turbomachine turbine according to any of claims 1 to 5, **characterised in that** the partitions (31, 32) have a thickness comprised between 0.1 mm and 0.3 mm.

7. Turbomachine turbine according to any of preceding claims, **characterised in that** abradable structure (29) is manufactured by an additive manufacturing technique and has a structure formed in a single-piece.
